# EUROPÄISCHE PATENTANMELDUNG

(11) **EP 4 026 686 A2**
(43) Veröffentlichungstag der Anmeldung: **13.07.2022**
(21) Anmeldenummer: 21209590.5
(22) Anmeldetag: 22.11.2021
(51) Int. Cl.: B29D 30/26

(54) **MANSCHETTE FÜR EINE EXPANDIERBARE REIFENBAUTROMMEL**

(30) Priorität: 08.01.2021 DE 102021200116
(71) Anmelder: Continental Reifen Deutschland GmbH, 30165 Hannover (DE)
(72) Erfinder: Ernst, Gerald, 30165 Hannover (DE); Sewerin, Josef, 30165 Hannover (DE); Knoche, Germar, 30165 Hannover (DE)
(74) Vertreter: Continental Corporation

(57) **Zusammenfassung**

Die Erfindung betrifft eine Manschette (10) für eine expandierbare Reifenbautrommel, mit einem umlaufenden Manschettengrundkörper (12), auf dessen Außenseite (14) ein längliches Reifenbauteil (100) aufwickelbar ist, und mehreren nebeneinander angeordneten Ausnehmungen (24a-24f), welche sich durch den Manschettengrundkörper (12) erstrecken und mit mehreren nebeneinander angeordneten Fixieröffnungen (22a-22f) auf der Außenseite (14) des Manschettengrundkörpers (12) verbunden sind, wobei die Ausnehmungen (24a-24f) zum Fixieren des Reifenbauteils (100) im Bereich der Fixieröffnungen (22a-22f) mit einem Vakuum beaufschlagbar sind, wobei zwischen benachbarten Fixieröffnungen (22a-22f) und/oder zwischen benachbarten Ausnehmungen (24a-24f) jeweils ein Materialsteg (44a-44e) des Manschettengrundkörpers (12) verläuft, welcher eine Breite von zumindest 10mm, insbesondere zumindest 15mm, aufweist.

## Beschreibung

Die Erfindung betrifft eine Manschette für eine expandierbare Reifenbautrommel nach dem Oberbegriff des Patentanspruchs 1.

Im Reifenbauprozess ist es üblich, dass Karkassen zunächst seitenwandfrei aufgebaut werden, sodass die seitenwandfreien Karkassen anschließend mit vorbereiteten Seitenwandprofilen zusammengeführt werden können. Entsprechende Seitenwandprofile werden auf einer expandierbaren Reifenbautrommel gesondert hergestellt. Hierzu wird ein längliches Reifenbauteil, üblicherweise ein vorabgelängter länglicher Materialstreifen, auf die Außenseite eines Manschettengrundkörpers einer Manschette aufgewickelt, welche sich auf der expandierbaren Reifenbautrommel befindet.

Durch den Manschettengrundkörper erstrecken sich mehrere nebeneinander angeordnete Ausnehmungen, welche mit mehreren nebeneinander angeordneten Fixieröffnungen auf der Außenseite des Manschettengrundkörpers verbunden sind. Die Ausnehmungen können mit einem Vakuum beaufschlagt werden, sodass das längliche Reifenbauteil während des Aufwickelvorgangs im Bereich der Fixieröffnungen angesaugt und somit auf der Außenseite des Manschettengrundkörpers fixiert wird. Nach der Herstellung des Seitenwandprofils kann dieses durch Beaufschlagen der sich durch den Manschettengrundkörper erstreckenden Ausnehmungen mit einer Trennluft wieder von der Außenseite des Manschettengrundkörpers gelöst werden.

Entsprechende Manschetten weisen häufig eine Vakuumleiste auf, über welche die Vakuumerzeugung in den Ausnehmungen des Manschettengrundkörpers und die Beaufschlagung der Ausnehmungen des Manschettengrundkörpers mit einer Trennluft umgesetzt wird. Eine entsprechende Manschette ist beispielsweise aus der Druckschrift DE 10 2016 202 068 A1 bekannt.

In der Praxis hat sich gezeigt, dass der Bereich des Manschettengrundkörpers, in welchem die Ausnehmungen und die Fixieröffnungen positioniert sind, besonders beschädigungsanfällig ist. Dies ist auf die während der Expansion der Reifenbautrommel temporär verursachte Deformation des Manschettengrundkörpers zurückzuführen, durch welche der Bereich der Ausnehmungen und der Fixieröffnungen aufgrund des dort fehlenden Materials zeitweise besonders stark beansprucht wird. Die Materialstege zwischen benachbarten Fixieröffnungen bzw. zwischen benachbarten Ausnehmungen werden während des Expansionsvorgangs der Reifenbautrommel derart stark beansprucht, dass es bei den bekannten Manschetten bereits nach wenigen Expansionsvorgängen zu Beschädigungen und Rissen im Bereich der Materialstege kommt. Aufgrund der daraus resultierenden geringen Standzeiten der bekannten Manschetten, müssen diese häufig ersetzt werden, wodurch ein erheblicher Mehraufwand im Reifenherstellungsprozess entsteht.

Darüber hinaus kommt es bei den bekannten Manschetten aufgrund einer unzureichenden Fixierung des länglichen Reifenbauteils während des Wickelvorgangs zu Verzügen, sodass es zu einer vergleichsweise geringen Auflagegenauigkeit des Reifenbauteils auf die Außenseite des Manschettengrundkörpers kommt. Zur Kompensation der geringen Auflagegenauigkeit werden die länglichen Reifenbauteil bisher derart aufgewickelt, dass in deren Endbereichen eine Überlappung oder eine offene Verbindung ersteht. Beide Situationen sind im Reifenbau stets zu vermeiden.

Zur Umsetzung der Überlappung ist ein längerer Materialstreifen erforderlich, wodurch die Materialkosten gesteigert werden. Der Verzug des aufgewickelten Reifenbauteils aufgrund der unzureichenden Fixierung führt außerdem zu einer Spleißverbindung, deren Festigkeit und Belastbarkeit reduziert ist.

Die der Erfindung zugrundeliegende Aufgabe besteht somit darin, die Haltbarkeit und Belastbarkeit von entsprechenden Manschetten zu erhöhen und dabei vorzugsweise die Fixierung des länglichen Reifenbauteils auf der Manschette zu verbessern.

Die der Erfindung zugrundeliegende Aufgabe wird gelöst durch eine Manschette der eingangs genannten Art, wobei zwischen benachbarten Fixieröffnungen und/oder zwischen benachbarten Ausnehmungen jeweils ein Materialsteg des Manschettengrundkörpers verläuft, welcher eine Breite von zumindest 10mm aufweist. Vorzugsweise weisen die Materialstege zwischen benachbarten Fixieröffnungen und/oder zwischen benachbarten Ausnehmungen eine Breite von zumindest 15mm auf.

Die Erfindung macht sich die Erkenntnis zunutze, dass über Materialstege mit einer Breite von zumindest 10mm, vorzugsweise von zumindest 15mm, die Haltbarkeit, Belastbarkeit und Lebensdauer der Manschette erheblich gesteigert werden kann, sodass trotz einer Vielzahl von Expansionsvorgängen eine lange Standzeit der Manschette gewährleistet wird. Darüber hinaus sorgt die erfindungsgemäße Manschette für eine gesteigerte Auflagegenauigkeit, bei welcher der Auflageverzug des aufgelegten länglichen Reifenbauteils verringert ist. Somit kann eine wesentlich bessere Spleißverbindung hergestellt werden, welche eine gesteigerte Haltbarkeit und Belastbarkeit aufweist.

Der umlaufende Manschettengrundkörper der Manschette kann beispielsweise aus einem vulkanisierten Gummi ausgebildet sein. Das Reifenbauteil, welches auf die Außenseite des Manschettengrundkörpers aufgewickelt wird, kann unvulkanisiert sein. Beispielsweise ist das Reifenbauteil ein länglicher unvulkanisierter Gummistreifen. Das Reifenbauteil kann ein Materialstreifen sein, aus welchem eine Seitenwand bzw. ein Seitenwandprofil hergestellt wird. Die Reifenbautrommel kann eine Seitenwandtrommel sein.

In einer bevorzugten Ausführungsform der erfindungsgemäßen Manschette weisen die Fixieröffnungen und die Querschnitte der Ausnehmungen die gleiche Größe, insbesondere den gleichen Durchmesser, auf. Vorzugsweise werden die Fixieröffnungen und die Ausnehmungen durch einfache Durchgangslöcher, welche sich durch den Manschettengrundkörper erstrecken, gebildet. Die Durchgangslöcher können Bohrungen sein. Die Durchgangslöcher weisen vorzugsweise einen konstanten Durchmesser auf.

In einer anderen bevorzugten Ausführungsform der erfindungsgemäßen Manschette weisen die Fixieröffnungen und/oder die Ausnehmungen einen Durchmesser auf, welcher in einem Bereich zwischen 7mm und 15mm liegt. Vorzugsweise liegt der Durchmesser der Fixieröffnungen und/oder der Ausnehmungen in einem Bereich zwischen 9mm und 13mm. In der Praxis haben sich diese Durchmesser in Kombination mit Materialstegen mit einer Breite von zumindest 10mm als besonders vorteilhaft erwiesen. Bei der Vakuumbeaufschlagung der Ausnehmungen lässt sich mit diesen Durchmesserwerten eine Fixierwirkung erreichen, bei welcher ein nachträgliches Verrutschen oder Versetzen des Materialstreifens während des Wickelvorgangs verhindert wird. Vorzugsweise weisen die Fixieröffnungen und/oder die Ausnehmungen einen Durchmesser von 9,5mm oder 12mm auf.

In einer weiteren bevorzugten Ausführungsform der erfindungsgemäßen Manschette ist auf der Außenseite des Manschettengrundkörpers eine Ausrichtlinie für eine äußere Kante des Reifenbauteils vorhanden oder eine entsprechende Ausrichtlinie ist mittels einer Linienprojektionseinrichtung erzeugbar. Der Abstand zwischen der Ausrichtlinie und der benachbart zu der Ausrichtlinie angeordneten Fixieröffnung beträgt vorzugsweise weniger als 11mm. Insbesondere beträgt der Abstand zwischen der Ausrichtlinie und der benachbart zu der Ausrichtlinie angeordneten Fixieröffnung weniger als 9mm, besonders bevorzugt weniger als 7mm. Die Ausrichtlinie dient zum korrekten Positionieren des Reifenbauteils vor bzw. während des Aufwickelns. Wenn auf der Außenseite des Manschettengrundkörpers keine Ausrichtlinie vorhanden ist, kann diese über eine Linienprojektion, beispielsweise über einen Linienlaser, erzeugt werden. Wenn die erste Fixieröffnung zu weit von der Ausrichtlinie und somit von der Außenkante des Reifenbauteils entfernt ist, wird das Reifenbauteil während des Aufwickelns aufgrund einer unzureichenden Fixierwirkung im Randbereich des Reifenbauteils leicht verzogen. Somit musste bisher ein Überlappungsbereich der Endabschnitte des aufgewickelten Reifenbauteils vorgesehen werden, um einen Komplettumlauf des Reifenbauteils trotz des Verzugs zu gewährleisten. Durch den nun geringeren Abstand zwischen der Ausrichtlinie und der benachbart zu der Ausrichtlinie angeordneten Fixieröffnung wird ein Verzug während des Wickelvorgangs vermieden. Die Endkanten des Reifenbauteils können somit exakt aneinander, insbesondere auf Stoß, gelegt werden, sodass keine Überlappung mehr erforderlich ist. Dies führt zu einer besseren Spleißverbindung, deren Festigkeit und Belastbarkeit erhöht ist. Darüber hinaus kann die Länge der Reifenbauteile geringer ausfallen. Beispielsweise können die Reifenbauteile um mehrere Millimeter, beispielsweise 7mm, gekürzt werden, da keine Überlappung der Endkanten des Reifenbauteils mehr erforderlich ist. Es kommt somit zu erheblichen Material- und Kosteneinsparungen.

In einer Weiterbildung weist die erfindungsgemäße Manschette eine Vakuumleiste auf, welche mehrere Vakuumanschlüsse aufweist und derart zerstörungsfrei und reversibel lösbar an dem Manschettengrundkörper befestigt ist, dass die Vakuumanschlüsse mit den sich durch den Manschettengrundkörper erstreckenden Ausnehmungen verbunden sind. Die Ausnehmungen in dem Manschettengrundkörper können somit über die Vakuumanschlüsse der Vakuumleiste mit einem Vakuum beaufschlagt werden. Die Vakuumanschlüsse sind vorzugsweise kraft- und/oder formschlüssig mit den sich durch den Manschettengrundkörper erstreckenden Ausnehmungen verbunden. Es ist folglich kein Verkleben oder Vulkanisieren der Vakuumleiste erforderlich. Die Vakuumleiste kann also mit unterschiedlichen Manschettengrundkörpern verwendet werden. Darüber hinaus kann der Manschettengrundkörper mit unterschiedlichen Vakuumleisten kombiniert werden. Die erforderliche Teileanzahl für die Herstellung von unterschiedlichen Reifen wird somit erheblich reduziert.

In einer weiteren bevorzugten Ausführungsform der erfindungsgemäßen Manschette ragen die Vakuumanschlüsse aus einem Leistenkörper der Vakuumleiste heraus. Die Vakuumanschlüsse der Vakuumleiste sind vorzugsweise nebeneinander angeordnet und bilden eine Reihe. Die Vakuumanschlüsse der Vakuumleiste sind vorzugsweise in gleicher Weise beabstandet wie die Fixieröffnungen und/oder die Ausnehmungen des Manschettengrundkörpers.

Es ist außerdem eine erfindungsgemäße Manschette vorteilhaft, bei welcher die Vakuumanschlüsse in die Ausnehmungen des Manschettengrundkörpers eingesetzt und/oder eingepresst sind. Vorzugsweise weisen die Vakuumanschlüsse einen Außendurchmesser auf, welcher größer ist als der Innendurchmesser der Ausnehmungen des Manschettengrundkörpers vor dem Einsatz bzw. vor dem Einpressen der Vakuumanschlüsse. Somit kommt es beim Einsetzen der Vakuumanschlüsse in die Ausnehmungen des Manschettengrundkörpers zu einer elastischen Verformung des Manschettengrundkörpers im Bereich der Ausnehmungen, woraus eine Haftwirkung resultiert, mittels welcher die Vakuum leiste an dem Manschettengrundkörper befestigt ist.

In einer Weiterbildung der erfindungsgemäßen Manschette umfassen die Vakuumanschlüsse jeweils ein Anschlusselement, welches zerstörungsfrei und reversibel lösbar mit einem Leistenkörper der Vakuum leiste verbunden ist. Vorzugsweise sind die Anschlusselemente in den Leistenkörper eingesteckt, eingeklemmt und/oder eingeschraubt. Die Anschlusselemente weisen vorzugsweise einen Durchgang auf, über welchen eine Luftkammer innerhalb der Vakuumleiste mit den Ausnehmungen in dem Manschettengrundkörper verbindbar ist.

In einer weiteren bevorzugten Ausführungsform der erfindungsgemäßen Manschette weisen die Anschlusselemente jeweils ein Außengewinde auf, über welches die Anschlusselemente in ein Innengewinde einer Aufnahme in dem Leistenkörper eingeschraubt sind. Durch die Schraubverbindung können die Anschlusselemente mit einem vergleichsweise geringen Aufwand gelöst und/oder ersetzt werden. Ein Lösen kann zur Reinigungs- und/oder Wartungszwecken erforderlich sein. Ein Ersetzen der Anschlusselemente kann bei einem Defekt oder einer Beschädigung erforderlich sein. Ferner können die Anschlusselemente auf diese Weise auch ohne großen Aufwand durch andere Anschlusselemente mit einem abweichenden Außendurchmesser ersetzt werden, sodass die Vakuumleiste mit einem anderen Manschettengrundkörper verbunden werden kann, dessen Ausnehmungen ebenfalls abweichende Innendurchmesser aufweisen.

In einer weiteren bevorzugten Ausführungsform der erfindungsgemäßen Manschette ist zumindest ein Vakuumanschluss durch einen Abdichtkörper abdichtbar, sodass der Abdichtkörper die Beaufschlagung der mit dem Vakuumanschluss verbundenen Ausnehmung des Manschettengrundkörpers mit einem Vakuum verhindert. Eine derartige Abdichtung ist erforderlich, wenn Reifenbauteile auf den Manschettengrundkörper aufgewickelt werden sollen, welche aufgrund ihrer geringen Breite nicht sämtliche Fixieröffnungen abdecken. Bei einer offenliegenden Fixieröffnung wäre sonst eine Vakuumbeaufschlagung der mit den übrigen Fixieröffnungen verbundenen Ausnehmungen nicht möglich, da die freiliegende Fixieröffnung für eine fluidleitende Verbindung mit der Umgebung sorgen würde. Vorzugsweise weist das Anschlusselement einen Durchgang mit einem Innengewinde auf. Der Abdichtkörper weist vorzugsweise ein Außengewinde auf, welches in das Innengewinde des Durchgangs des Anschlusselements eingedreht werden kann. Das Einsetzen und Entfernen des Abdichtkörpers kann somit schnell, unkompliziert und ohne eine Beschädigung des Anschlusselements erfolgen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Manschette mit einem aufgewickelten Reifenbauteil in einer schematischen Darstellung;
- Fig. 2: eine Schnittdarstellung eines Bereichs der in der Fig. 1 abgebildeten Manschette;
- Fig. 3: den Leistenkörper einer Vakuumleiste einer erfindungsgemäßen Manschette in einer perspektivischen Darstellung;
- Fig. 4: ein Anschlusselement einer erfindungsgemäßen Manschette in einer perspektivischen Darstellung;
- Fig. 5: einen Leistenkörper und mehrere Anschlusselemente einer Vakuumleiste einer erfindungsgemäßen Manschette in einer schematischen Schnittdarstellung; und
- Fig. 6: eine Vakuumleiste einer erfindungsgemäßen Manschette in einer perspektivischen Darstellung.

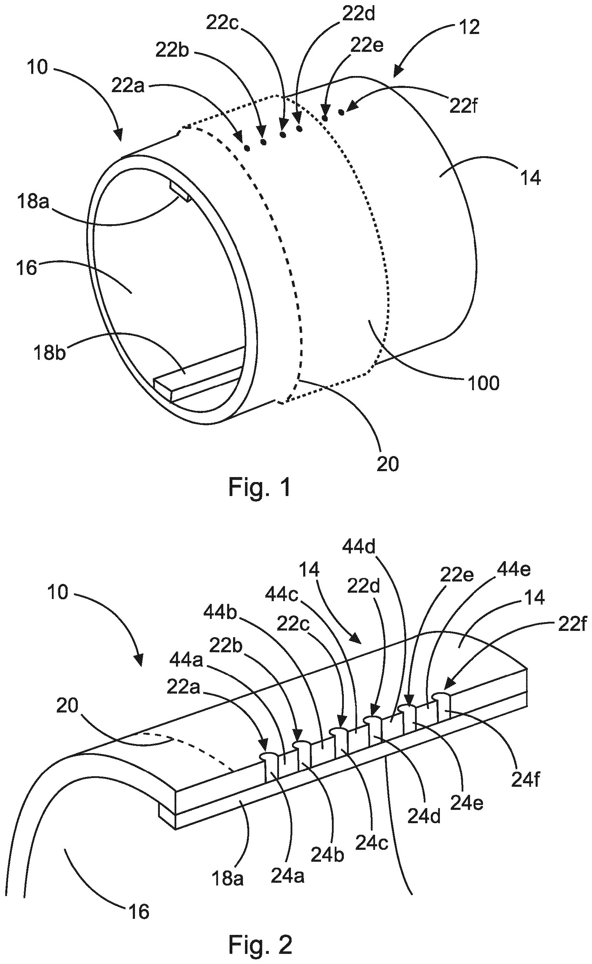

Die Fig. 1 zeigt eine Manschette 10 für eine expandierbare Reifenbautrommel, mit welcher Seitenwandprofile für einen Reifenrohling herstellbar sind. Die Manschette 10 umfasst einen umlaufenden Manschettengrundkörper 12, auf dessen Außenseite 14 ein längliches Reifenbauteil 100 aufwickelbar ist.

Auf der Innenseite 16 des Manschettengrundkörpers 12 sind zwei gegenüberliegende Vakuumleisten 18a, 18b angeordnet. Die Vakuumleisten 18a, 18b sind zerstörungsfrei und reversibel lösbar an dem Manschettengrundkörper 12 befestigt. In den Vakuumleisten 18a, 18b befindet sich eine Luftkammer, in welcher ein Vakuum erzeugt werden kann. Die Luftkammer ist mit mehreren nebeneinander angeordneten Fixieröffnungen 22a-22f auf der Außenseite 14 des Manschettengrundkörpers 12 verbunden. Während der Vakuumerzeugung in der Luftkammer der Vakuumleisten 18a, 18b wird das Reifenbauteil 100 im Bereich der Fixieröffnungen 22a-22d angesaugt und somit auf der Außenseite 14 des Manschettengrundkörpers 12 fixiert. Die Öffnungen 22e, 22f werden aufgrund der vergleichsweise geringen Breite des Reifenbauteils 100 nicht von dem Reifenbauteil 100 bedeckt. Zur Vakuumerzeugung und somit zur Erzielung eines Ansaugeffekts sind die Fixieröffnungen 22e, 22f folglich zu verschließen bzw. abzudichten, sodass kein Druckausgleich zwischen der Luftkammer der Vakuumleisten 18a, 18b und der Umgebung stattfinden kann.

Auf der Außenseite 14 des Manschettengrundkörpers 12 ist entweder eine Ausrichtlinie 20 vorhanden oder die Ausrichtlinie 20 wird mittels einer Linienprojektionseinrichtung auf der Außenseite 14 des Manschettengrundkörpers 12 erzeugt. In diesem Fall kann die Linienprojektionseinrichtung beispielsweise ein Linienlaser sein. Die Ausrichtlinie 20 dient zum Ausrichten der äußeren Kante des Reifenbauteils 100 und somit zum korrekten Positionieren des Reifenbauteils 100 vor bzw. während des Aufwickelns. Der Abstand der Ausrichtlinie 20 und der benachbart zu der Ausrichtlinie 20 angeordneten Fixieröffnung 22a beträgt weniger als 11mm. Beispielsweise beträgt der Abstand zwischen der Ausrichtlinie 20 und der Fixieröffnung 22a weniger als 7mm. Durch den geringen Abstand zwischen der Ausrichtlinie 20 und der Fixieröffnung 22a wird ein Verzug oder ein Verrutschen des Reifenbauteils während des Aufwickelvorgangs effektiv vermieden, sodass die Endkanten des Reifenbauteils 100 exakt aneinandergelegt werden können und keine Überlappung zum Ausgleich eines etwaigen Verzugs des Reifenbauteils 100 vorgesehen werden muss.

Die Fig. 2 zeigt, dass sich mehrere nebeneinander angeordnete Ausnehmungen 24a-24f durch den Manschettengrundkörper 12 erstrecken. Die Ausnehmungen 24a-24f sind mit den Fixieröffnungen 22a-22f auf der Außenseite 14 des Manschettengrundkörpers 12 verbunden. Die Fixieröffnungen 22a-22f und die Querschnitte der Ausnehmungen 24a-24f weisen den gleichen Durchmesser auf und werden durch Durchgangslöcher gebildet. Die Ausnehmungen 24a-24f sind mit der schematisch dargestellten Vakuumleiste 18a verbunden und zum Fixieren des Reifenbauteils 100 im Bereich der Fixieröffnungen 22a-22f mit einem Vakuum beaufschlagbar.

Zwischen benachbarten Fixieröffnungen 22a-22f und zwischen benachbarten Ausnehmungen 24a-24f verläuft jeweils ein Materialsteg 44a-44e des Manschettengrundkörpers, welcher eine Breite von zumindest 10mm, vorzugsweise zumindest 15mm, aufweist. Aufgrund der Materialstegbreite weist der Manschettengrundkörper 12 eine hohe Haltbarkeit und Belastbarkeit auf, sodass eine lange Standzeit auch bei einer Vielzahl von Expansionsvorgängen der Reifenbautrommel gewährleistet wird. Der Manschettengrundkörper 12 ist aus einen vulkanisierten Gummi ausgebildet.

Die Fixieröffnungen 22a-22f und die Ausnehmungen 24a-24f weisen einen Durchmesser auf, welcher in einem Bereich zwischen 7mm und 15mm, vorzugsweise in einem Bereich zwischen 9mm und 13mm liegt. Beispielsweise liegt der Durchmesser der Fixieröffnungen 22a-22f und/oder der Durchmesser der Ausnehmungen 24a-24f bei 9,5mm oder 12mm.

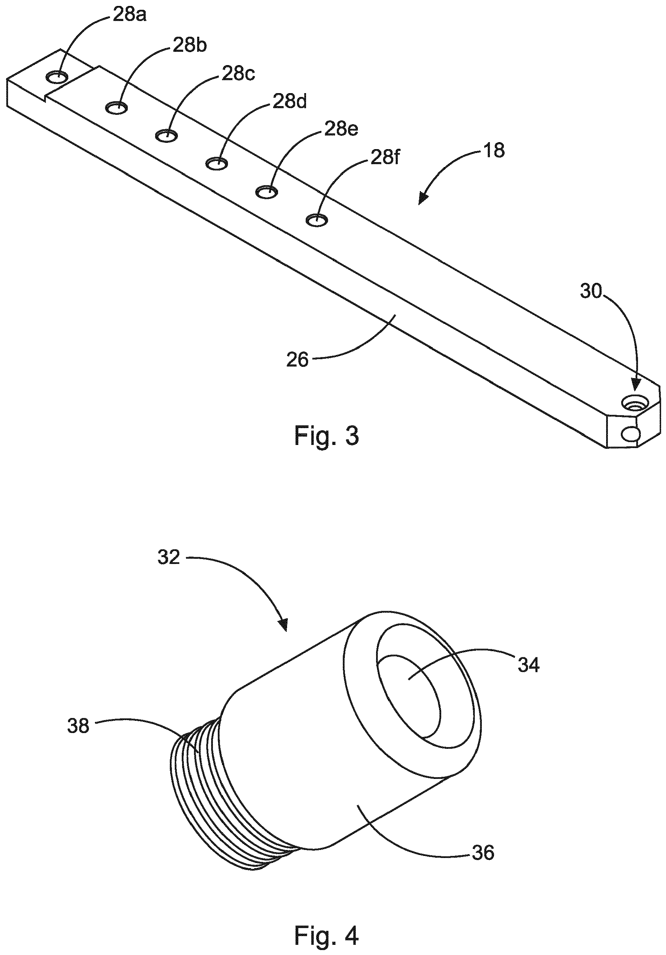

Die Fig. 3 zeigt, dass die Vakuumleiste 18 einen länglichen Leistenkörper 26 aufweist. Der Leistenkörper 26 weist auf einer Seite mehrere nebeneinander angeordnete und eine Reihe ausbildende Aufnahmen 28a-28f auf. Die Aufnahmen 28a-28f dienen zur Aufnahme von Anschlusselementen 32 (vgl. Fig. 4). Die Anschlusselemente 32 sind zerstörungsfrei und reversibel lösbar in die Aufnahmen 28a-28f eindrehbar.

Die Bohrung 30 dient zur Fixierung der Vakuumleiste 18 an der Reifenbautrommel. Über einen Versorgungsanschluss kann in einer internen Luftkammer der Vakuumleiste 18 ein Vakuum erzeugt werden, wobei die interne Luftkammer mit den Aufnahmen 28a-28f verbunden ist. Der Versorgungsanschluss liegt auf der Unterseite der Vakuumleiste 18 und ist somit in der Fig. 3 nicht dargestellt.

Die Fig. 4 zeigt ein Anschlusselement 32, welches aufgrund des Außengewindes 38 in eine Aufnahme 28a-28f eines Leistenkörpers 26 einschraubbar ist. Das Anschlusselement 32 weist einen Durchgang 34 auf, über welchen die interne Luftkammer einer Vakuumleiste 18 mit einer Ausnehmung 24a-24f eines Manschettengrundkörpers 12 verbindbar ist. Der Durchgang 34 weist ein Innengewinde auf, in welches ein Abdichtkörper mit einem korrespondierenden Außengewinde einschraubbar ist. Über den eingeschraubten Abdichtkörper wird der Durchgang 34 versperrt, sodass der Abdichtkörper die Beaufschlagung der mit dem Anschlusselement 32 verbundenen Ausnehmung 24a-24f des Manschettengrundkörpers 12 mit einem Vakuum verhindert.

Das Anschlusselement 32 weist eine Außenfläche 36 auf. Der Durchmesser der zylindrischen Außenfläche 36 ist größer als der Innendurchmesser der Ausnehmungen 24a-24f des Manschettengrundkörpers 12, mit welcher die Vakuumleiste 18 verwendet werden soll. Somit kann die Vakuumleiste 18 über die sich in den Aufnahmen 28a-28f befindenden Anschlusselemente 32 in die Ausnehmungen 24a-24f des Manschettengrundkörpers 12 eingesetzt und eingepresst werden. Ein zusätzliches Verkleben oder Vulkanisieren der Vakuumleiste 18 auf der Innenseite 16 des Manschettengrundkörpers 12 ist somit nicht erforderlich.

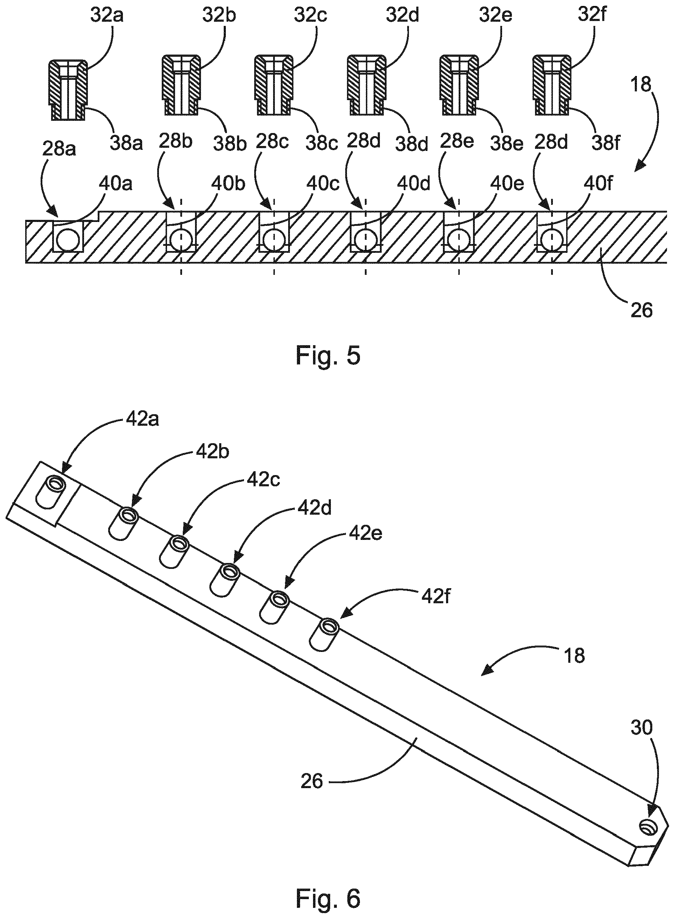

Die Fig. 5 zeigt, dass in jede Aufnahme 28a-28f eines Leistenkörpers 26 ein Anschlusselement 32a-32f einschraubbar ist. Hierzu weisen die Aufnahmen 28a-28f ein Innengewinde 40a-40f auf, welches mit dem Außengewinde 38a-38f der Anschlusselemente 32a-32f korrespondiert. Die Anschlusselemente 32a-32f können also zerstörungsfrei und reversibel lösbar mit dem Leistenkörper 26 der Vakuumleiste 18 verbunden werden.

Die Fig. 6 zeigt, dass die Anschlusselemente 32a-32f Vakuumanschlüsse 42a-42f ausbilden, welche aus dem Leistenkörper 26 der Vakuumleiste 18 herausragen. Die Vakuumanschüsse 42a-42f sind nebeneinander angeordnet und bilden eine Reihe. Die Vakuumanschlüsse 42a-42f sind in Ausnehmungen 24a-24f eines Manschettengrundkörpers 12 einsetzbar und einpressbar, sodass die Vakuumleiste 18 kraftschlüssig auf der Innenseite 16 eines Manschettengrundkörpers 12 befestigbar ist.

### Bezugszeichenliste

- 10: Manschette
- 12: Manschettengrundkörper
- 14: Außenseite
- 16: Innenseite
- 18, 18a, 18b: Vakuumleisten
- 20: Ausrichtlinie
- 22a-22f: Fixieröffnungen
- 24a-24f: Ausnehmungen
- 26: Leistenkörper
- 28a-28f: Aufnahmen
- 30: Bohrung
- 32, 32a-32f: Anschlusselemente
- 34: Durchgang
- 36: Außenfläche
- 38, 38a-38f: Außengewinde
- 40a-40f: Innengewinde
- 42a-42f: Vakuumanschlüsse
- 44a-44e: Materialsteg

- 100: Reifenbauteil

## Patentansprüche

1. Manschette (10) für eine expandierbare Reifenbautrommel, mit
- einem umlaufenden Manschettengrundkörper (12), auf dessen Außenseite (14) ein längliches Reifenbauteil (100) aufwickelbar ist; und
- mehreren nebeneinander angeordneten Ausnehmungen (24a-24f), welche sich durch den Manschettengrundkörper (12) erstrecken und mit mehreren nebeneinander angeordneten Fixieröffnungen (22a-22f) auf der Außenseite (14) des Manschettengrundkörpers (12) verbunden sind, wobei die Ausnehmungen (24a-24f) zum Fixieren des Reifenbauteils (100) im Bereich der Fixieröffnungen (22a-22f) mit einem Vakuum beaufschlagbar sind;
**dadurch gekennzeichnet, dass** zwischen benachbarten Fixieröffnungen (22a-22f) und/oder zwischen benachbarten Ausnehmungen (24a-24f) jeweils ein Materialsteg (44a-44e) des Manschettengrundkörpers (12) verläuft, welcher eine Breite von zumindest 10mm, insbesondere zumindest 15mm, aufweist.

2. Manschette (10) nach Anspruch 1,
**dadurch gekennzeichnet, dass** die Fixieröffnungen (22a-22f) und die Querschnitte der Ausnehmungen (24a-24f) die gleiche Größe, insbesondere den gleichen Durchmesser, aufweisen.

3. Manschette (10) nach Anspruch 1 oder 2,
**dadurch gekennzeichnet, dass** die Fixieröffnungen (22a-22f) und/oder die Ausnehmungen (24a-24f) einen Durchmesser aufweisen, welcher in einem Bereich zwischen 7mm und 15mm, vorzugsweise in einem Bereich zwischen 9mm und 13mm, liegt.

4. Manschette (10) nach einem der vorstehenden Ansprüche, **dadurch gekennzeichnet, dass** auf der Außenseite (14) des Manschettengrundkörpers (12) eine Ausrichtlinie (20) für eine äußere Kante des Reifenbauteils (100) vorhanden oder mittels einer Linienprojektionseinrichtung erzeugbar ist, wobei der Abstand zwischen der Ausrichtlinie (20) und der benachbart zu der Ausrichtlinie (20) angeordneten Fixieröffnung (22a-22f) weniger als 11mm, insbesondere weniger als 9mm, besonders bevorzugt weniger als 7mm, beträgt.

5. Manschette (10) nach einem der vorsehenden Ansprüche, **gekennzeichnet durch** eine Vakuumleiste (18, 18a, 18b), welche mehrere Vakuumanschlüsse (42a-42f) aufweist und derart zerstörungsfrei und reversibel lösbar an dem Manschettengrundkörper (12) befestigt ist, dass die Vakuumanschlüsse (42a-42f) mit den sich durch den Manschettengrundkörper (12) erstreckenden Ausnehmungen (24a-24f) verbunden sind.

6. Manschette (10) nach Anspruch 5,
**dadurch gekennzeichnet, dass** die Vakuumanschlüsse (42a-42f) aus einem Leistenkörper (26) der Vakuumleiste (18, 18a, 18b) herausragen.

7. Manschette (10) nach Anspruch 5 oder 6,
**dadurch gekennzeichnet, dass** die Vakuumanschlüsse (42a-42f) in die Ausnehmungen (24a-24f) des Manschettengrundkörpers (12) eingesetzt und/oder eingepresst sind.

8. Manschette (10) nach einem der Ansprüche 5 bis 7,
**dadurch gekennzeichnet, dass** die Vakuumanschlüsse (42a-42f) jeweils ein Anschlusselement (32, 32a-32f) umfassen, welches zerstörungsfrei und reversibel lösbar mit einem Leistenkörper (26) der Vakuumleiste (18, 18a, 18b) verbunden ist.

9. Manschette (10) nach Anspruch 8,
**dadurch gekennzeichnet, dass** die Anschlusselemente (32, 32a-32f) jeweils ein Außengewinde (38, 38a-38f) aufweisen, über welches die Anschlusselemente (32, 32a-32f) in ein Innengewinde (40a-40f) einer Aufnahme (28a-28f) in dem Leistenkörper (26) eingeschraubt sind.

10. Manschette (10) nach einem der Ansprüche 5 bis 9,
**dadurch gekennzeichnet, dass** zumindest ein Vakuumanschluss (42a-42f) durch einen Abdichtkörper abdichtbar ist, sodass der Abdichtkörper die Beaufschlagung der mit dem Vakuumanschluss (42a-42f) verbundenen Ausnehmung (24a-24f) des Manschettengrundkörpers (12) mit einem Vakuum verhindert.
